# EUROPÄISCHE PATENTSCHRIFT

(11) **EP 1 220 989 B1**
(45) Veröffentlichungstag und Bekanntmachung des Hinweises auf die Patenterteilung: **26.02.2003**
(21) Anmeldenummer: 99964580.7
(22) Anmeldetag: 15.12.1999
(51) Int. Cl.: F03G 3/00, F03G 6/00

(54) **STROMERZEUGUNG MIT KÜNSTLICH ERZEUGTEM WASSER IN GROSSER HÖHE**
GENERATION OF ELECTRICITY, USING WATER CREATED ARTIFICIALLY AT ALTITUDE
SYSTEME DE PRODUCTION DE COURANT AU MOYEN D'EAU PRODUITE DE FACON ARTIFICIELLE EN ALTITUDE

(43) Veröffentlichungstag der Anmeldung: 10.07.2002
(73) Patentinhaber: GANGKOFNER, Max, 94227 Zwiesel (DE)
(72) Erfinder: GANGKOFNER, Max, 94227 Zwiesel (DE)
(74) Vertreter: Kunz, Herbert, Dr.
(86) Internationale Anmeldenummer: EP9909975
(87) Internationale Veröffentlichungsnummer: WO01044657

(56) Entgegenhaltungen:
- DE-A- 2 747 529
- DE-A- 19 506 317
- DE-A- 19 838 463
- US-A- 4 244 189
- US-A- 4 382 365

## Beschreibung

Die vorliegende Erfindung betrifft eine Stromerzeugung mit künstlich erzeugtem Wasser in großer Höhe gemäß dem Oberbegriff des Anspruchs 1 (Siehe auch DE-A-2 747 529).

Die Energieerzeugung als solche wird zukünftig immer mehr an Bedeutung gewinnen, da aufgrund knapp werdender Energieträger die Energieversorgung und insbesondere die Stromerzeugung bei einem ständig steigenden Energiekonsum schwieriger wird. Insbesondere in Gebieten, die knapp an Energieressourcen sind, müssen entweder die Energieressourcen aufwendig angeliefert werden oder aber Strom wird mit Überlandleitungen in diese Gebiete transportiert. Insbesondere in gebirgigem Gebiet sind derartige Transportwege äußerst schwierig zu bewältigen.

Zur Vermeidung derartig aufwendiger Transportwege ist beispielsweise in der DE 36 19,269 eine Vorrichtung beschrieben, die einen im wesentlichen kegelförmigen, sich verjüngenden Turm aufweist, der über einem Ringkanal angeordnet ist, der mit aus einem benachbarten Fluß abgeleiteten Wasser gespeist wird. In der Wand des Turmes befindet sich eine Anzahl von Steigrohren, in denen ein Energieträgerdampf zu einer oberen Plattform aufsteigt, wo der Dampf in Kondensatoren verflüssigt wird. Der flüssige Energieträger fällt in einem innerhalb des Turmes angeordneten Fallrohr, das mit einer Flüssigkeitsturbine verbunden ist, zur Ebene des Ringkanals zurück. Von dort gelangt der Energieträger in den im Ringkanal angeordneten Wärmetauscher, in dem er verdampft, bevor er in den Steigrohren aufsteigt. Um diesen Kreislauf in Gang zu setzen sind beispielsweise zusätzliche Fremdenergiequellen erforderlich. Dies stellt eine zusätzliche erhebliche Umweltbelastung da, da zusätzlich ein erheblich großer Energieaufwand notwendig ist.

Aufgabe der vorliegenden Erfindung ist es, eine gattungsgemäße Vorrichtung so auszubilden, daß sie möglichst umweltschonend und ohne Fremdenergiezufuhr arbeitet.

Gelöst wird diese Aufgabe mit den Merkmalen des Anspruchs 1.

Vorteilhafte Weiterbildungen der vorliegenden Erfindung sind Gegenstand der abhängigen Unteransprüche.

Erfindungsgemäß wird eine Stromerzeugung mit künstlich erzeugtem Wasser in großer Höhe bereitgestellt, bei der das wasserhaltige Medium Umgebungsluft ist, wobei in den Rohren Heizstäbe angeordnet sind, und in der Tallage die Umgebungsluft durch schwarz lackierte, der Sonne ausgesetzte Flächen zusätzlich erwärmt wird.

Mit dieser Maßnahme wird erreicht, daß kein weiterer spezieller Energieträger bereitgestellt wird, sondern lediglich die bereits vorhandene Umgebungsluft als Energieträger herangezogen werden muß, wobei die mit den Heizstäben ausgestatteten Rohre eine frühzeitige Kondensation verhindert wird. Es hat sich herausgestellt, daß insbesondere die anmeldungsgemäße Stromerzeugung an Hanglagen bzw. Berghänge günstig zu betreiben ist, und insbesondere ein entsprechender Temperaturgradient bei Berghöhen von 4000 m besonders gut arbeitet. Beispielsweise könnte die Stromerzeugung gut im Bereich des Mount Kinabalu Borneo verwendet werden, da die Berge mit Berghöhen von bis zu 4000 m direkt aus Meereshöhe aufsteigend sind und die angenommene Temperatur der aufgewärmten Luft ca. 50°C in Tallage beträgt. Um grundsätzlich die Kondensation des wasserhaltigen Mediums herbeizuführen, ist es von Vorteil, wenn neben der Kaltluftkondensation auch eine Kühlkammer vorgesehen ist, welche beispielsweise in dem Inneren eines Berges angeordnet werden kann, so daß das aufgrund der natürlichen Abkühlung des durch die Kondensation des wasserhaltigen Mediums entstandene Wasser gegebenenfalls die Kaltluft weiter abkühlen kann bzw. in dem Fall, in dem eine Wasserdusche zur Erhöhung der Kondensation vorgesehen ist, daß das für die Wasserdusche notwendige Wasser ebenfalls aus der Kühlkammer hinzugefügt werden kann. Auf diese Weise werden aufwendige Kühlaggregate bzw. Kühlvorrichtungen vermieden.

Werden gemäß Anspruch 2 die Rohre mit Ventilatoren ausgestattet, so kann zum Einen auf diese Weise der Auftrieb unterstützt werden. Andererseits besteht die Möglichkeit, im Falle eines sehr starken Auftriebs im Aufwindkanal als willkommener Nebeneffekt ebenfalls eine zusätzliche Stromerzeugung.

Wird gemäß Anspruch 3 die Kaltluft mit Staubpartikeln eingestäubt, so sind Kondensationskeme vorhanden, die die Wasserbildung aus der Umgebungsluft begünstigen und somit die Kondensation des Wassers unterstützen.

Werden die schwarz lackierten Flächen als Alublech gemäß Anspruch 4 ausgestaltet, so kann ein Wärmestau erzeugt werden, der zusätzlich die Umgebungsluft erhitzt.

Wird gemäß Anspruch 5 das Alublech mit einer Glasplatte abgedeckt, so ist das Blech vor Unrat geschützt.

Wird gemäß Anspruch 6 eine Wasserdusche für das wasserhaltige Medium vorgesehen, so wird auf diese Weise erneut die Ausfällung von Wasser begünstigt, da die Wasserdusche kaltes Wasser zuführt.

Je nach Plazierung der Stromerzeugungsanlage kann es von Vorteil sein, daß die Sonnenenergie durch Prismen und Spiegeln gebündelt auf die schwarz lackierten Flächen gemäß Anspruch 7 aufgebracht werden.

Wird gemäß Anspruch 8 das von dem niedrigen Niveau in die Höhe führende Rohr aus mehreren Rohren zusammengesetzt, so können entsprechenden Strömungseigenschaften Rechnung getragen werden.

Wird gemäß Anspruch 9 zusätzlich zu der Integration der Kühlkammer in dem Berg das gekühlte Wasser der Wasserdusche zugeführt, so wird ein natürlicher Kreislauf zur Abkühlung und Förderung der Kondensation von Wasser bereitgestellt.

Es ist ebenso vorteilhaft, wenn die Kondensation des Wassers durch ein Vibrationsmittel unterstützt wird, vorzugsweise durch einen Gong, der in der Mischkammer integriert wird.

Anhand der nachfolgenden Zeichnungen soll detaillierter auf das Funktionsprinzip der Stromerzeugung eingegangen werden.

Fig. 1 ist eine Übersichtszeichnung der Anlage zur Stromerzeugung.

Fig. 2 ist eine detailliertere Aufrißzeichnung, für die Sammlung der Umgebungsluft.

Fig. 3 ist eine Teilzeichnung hinsichtlich der Kondensation von Wasser.

Fig. 4 zeigt schematisch einen Teilbereich der vorliegenden Erfindung.

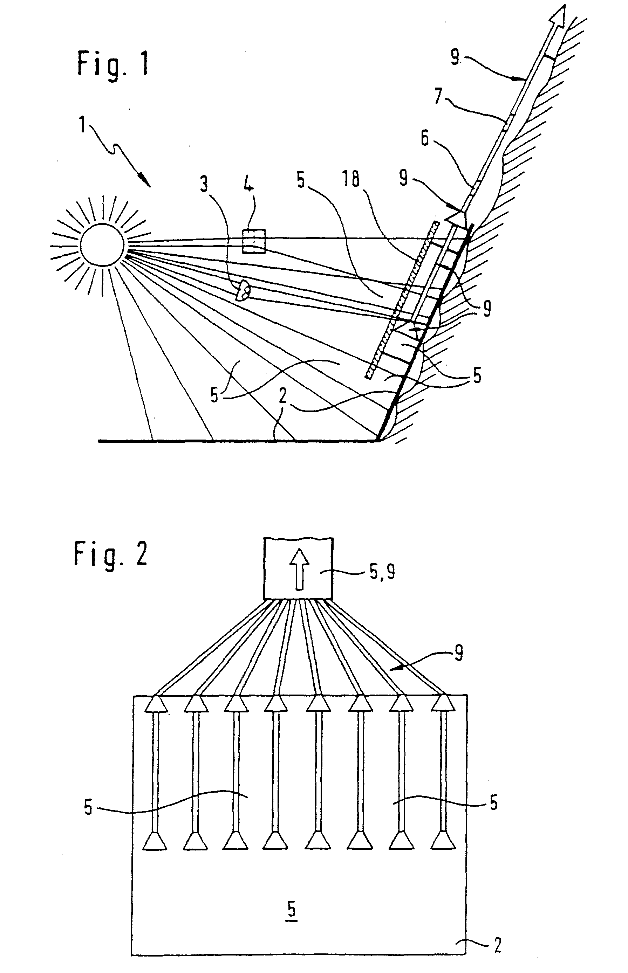

Die in Fig. 1 dargestellte Gesamtansicht zeigt zum Einen die Anordnung 1 zur Stromerzeugung mit künstlich erzeugtem Wasser in großer Höhe dadurch, daß talseitig Alubleche 2 vorgesehen sind, die die Umgebungsluft mittels Sonnenenergie erwärmen und die aufsteigende Luft über ein Rohrsystem 5, 9 in höher gelegene Bereiche transportiert wird. Die Alubleche können hierbei sowohl in der Tallage als auch im Talbereich des Berghangs angeordnet sein. Zur Erhöhung der Erwärmungscharakteristik können die Sonnenstrahlen über Prismen bzw. Spiegel 3, 4 auf die in Form von schwarz lackierten Alublechen 2 dargestellten schwarz lackierten Flächen umgelenkt werden. Zum Schutz vor Unrat wird beispielsweise eine Glasplatte 18 vorgesehen, welche die Ansaugrohre 5 abdeckt. In den Ansaugröhren 5 können beispielsweise die Ventilatoren vorgesehen sein, wobei in höheren Lagen Heizstäbe 7 in den Rohren vorgesehen sein können, um eine frühzeitige Kondensation zu vermeiden. Um die zu transportierende Umgebungsluft zu optimieren, ist es sinnvoll, wenn beispielsweise, wie in Fig. 2 gezeigt, die Umgebungsluft über ein bestimmtes Rohrsystem 5, 9 gesammelt wird, um dann in das Aufstiegsrohr einzufügen.

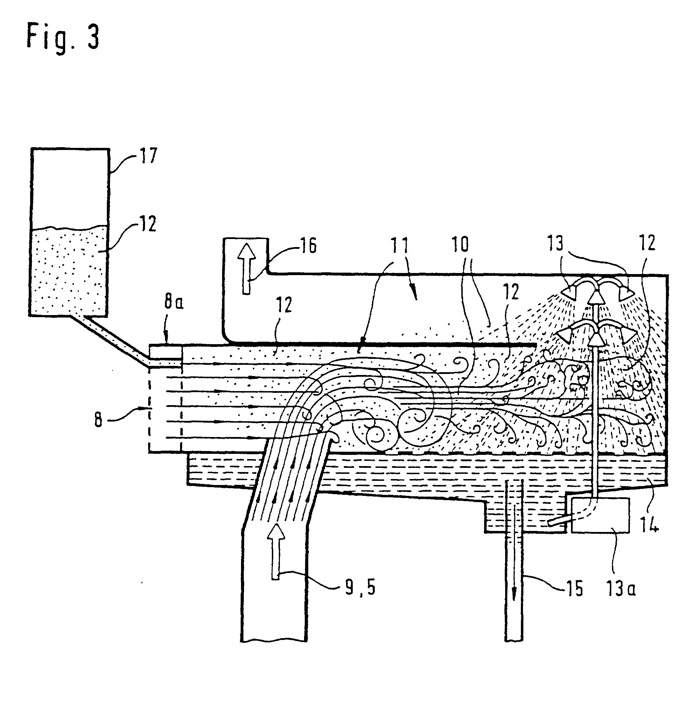

Die Stromerzeugung wird beispielsweise gemäß Fig. 3 durch Zusammenführen von Warmluft aus Tallagen und Kaltluft in Höhenlagen zur Kondensation ermöglicht. Hierzu wird die Warmluft mit von einem niedrigem Niveau in diese Höhe führenden Rohr mit Kaltluft zusammengeführt, welche beispielsweise über einen Ventilator angesaugt werden kann. Aufgrund der Vermischung kondensiert das Wasser, welches im unteren Bereich der Mischkammer 11 gesammelt wird, und über den Abfluß 15 in die Tallage zurückgeführt wird. Zusätzlich ist eine Wasserdusche 13 zur Kondensationsförderung vorgesehen, welche Wasser über eine Pumpe in den Mischungsraum transportiert. Zur weiteren Erhöhung der Kondensationsförderung ist ein Behälter 17 für Staubpartikel 12 vorgesehen, welche ebenfalls mit der Kaltluft der Warmluft aus Tallagen gemischt werden.

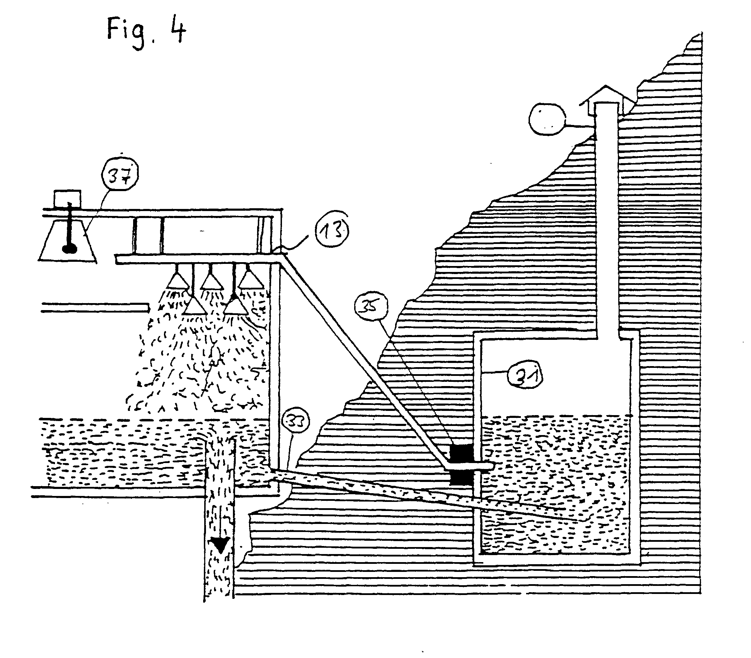

In Fig. 4 ist schematisch die zur Anordnung zur Stromerzeugung erforderliche Kühlkammer 31 dargestellt. Die Kühlkammer ist in diesem Fall dazu ausgerichtet, das bereits kondensierte Wasser aus der Mischkammer über eine Abflußleitung, welche in den Berg hineingeht, in die Kühlkammer 31 zu führen. Die Abflußleitung 33 ist vorteilhafterweise in Flußrichtung geneigt angeordnet, um somit keine weitere zusätzliche Pumpleistung zu benötigen. Das aufgrund des Kälteübertrags von dem Berg über die Kühlkammer zu dem Wasser abgekühlte Wasser wird mittels einer Pumpenanlage 35 zu der Wasserdusche 13 gefördert, um somit das zusätzlich abgekühlte Wasser zur Förderung der Kondensation des in der Umgebungsluft enthaltenen Wassers bereitzustellen. Auf diese Weise wird ein Kreislauf herbeigeführt, der eine Abkühlung oder weitere Kühlaggregate bzw. Kühlvorrichtungen gewährleistet. Ebenfalls in Fig. 4 ist das sogenannte Vibrationsmittel eingezeichnet, welches in die Mischkammer hineinragt, um aufgrund der induzierten Schwingung eine Kondensationsförderung herbeizuführen. In diesem Fall ist das Vibrationsmittel als Gong 37 dargestellt, jedoch können auch weitere zur Kondensationsförderung beitragende Vibrationsmittel verwendet werden.

Generell zeichnet sich die Stromerzeugung mit künstlich erzeugtem Wasser auf hohen Bergen oder Türmen erfindungsgemäß dadurch aus, daß zum Zwecke der Stromerzeugung Luft in Tallagen erwärmt wird. Dies ist dadurch gekennzeichnet, daß eine Landfläche mit schwarz lackiertem Alublech ausgelegt wird, um einen Wärmestau zu erzeugen. Die Sonnenwärme wird zusätzlich über Prismen, Spiegel oder einem sonstigen Mittel aktiviert. Dieses Blech wird vor Unrat mit einer Glasscheibe geschützt. Das Alublech wird in einem günstigen Einfallswinkel zur Sonne angebracht, daß zum Zwecke der Stromerzeugung die erzeugte Warmluft in isolierten Rohren auf hohe Berge oder Türme transportiert wird, daß der Auftrieb der Luft (wenn nötig) gefördert und eine frühzeitige Kondensation verhindert wird, indem in den Rohren zur Verstärkung des Aufwindes Ventilatoren angebracht werden und Heizstäbe installiert werden, um eine frühzeitige Abkühlung (und dadurch Kondensation) zu verhindern.

Zum Zwecke der Stromerzeugung wird auf hohen Bergen oder Türmen kalte Luft in große Rohre oder Räume mit Ventilatoren angesaugt, wobei zum Zwecke der Stromerzeugung die hochtransportierte Warmluft aus Tallagen mit der kalten Luft auf hohen Bergen oder Türmen in großen Rohren oder Räumen zwangsgemischt wird und dadurch ein künstliches Gewitter erzeugt wird, und zwar mit starken Ausfall von Wasser. Die Kondensation der Luft wird dadurch gefördert, daß der Kaltluft im Ansaugvorgang Staubpartikelchen eingestäubt werden, um Kondensationspunkte für die Wasserbildung zu haben. Die Mischluft wird anschließend mittels einer Wasserpumpe durch eine Wasserdusche geführt, um den Ausfall des Wassers zu erzwingen. Die Kondensation wird durch andere Hilfsmittel (z. B. Zugabe von Sauerstoff) gefördert. Das erzeugte Wasser wird in einer Wasserrinne oder Behälter gesammelt und in einem Rohr mit großem Gefälle zur Turbine mit Generator zur Stromerzeugung abgeleitet. Die Restluft wird an die Atmosphäre abgegeben. Das Wasser wird nach der Energiegewinnung anderen Zwecken oder Verwendungen zugeführt, da keinerlei Verunreinigungen vorliegen (z. B. Brauchwasser für Haushalte, Wasser für Gärtnereien usw.). Im Falle eines sehr starken Auftriebes im Aufwindkanal können durch Anbringen eines Ventilators mit Generator ebenfalls eine weitere Stromerzeugung als willkommener Nebeneffekt genutzt werden.

Ferner zeichnet sich die Stromerzeugung mit künstlich erzeugtem Wasser auf hohen Bergen oder Türmen dadurch aus, daß zum Zwecke der Stromerzeugung die Sonnenwärme in Tallagen aktiviert wird, und zwar durch Auslegung einer Landfläche mit schwarz lackiertem Aluminiumblech und durch Anbringen von Prismen und Spiegeln, um die Sonneneinwirkung noch zusätzlich zu verstärken.

Der Transport der Warmluft in isolierten Rohren auf hohe Berge oder Türme mit eigenem Auftrieb kann mit Hilfe von Ventilatoren und Heizstäben erfolgen, die in den Rohren angebracht sind. Zum Zwecke der Stromerzeugung auf hohen Bergen oder Türmen wird kältere Höhenluft mit Ventilatoren angesaugt. Zum Zwecke der Wasserbildung wird die hochtransportierte Warmluft mit der angesaugten Kaltluft in der Höhenlage in großen Rohren oder Räumen zwangsgemischt.

Zur Förderung der Wasserbildung der Mischluft werden Staubpartikelchen beigemischt, um die Kondensation der Luft zu ermöglichen, wobei die Mischluft zusätzlich durch eine Wasserdusche geführt wird, um den Wasserausfall zu erzwingen.

Der Ausfall des Wassers wird durch das künstlich erzeugte Gewitter in Rohren oder Räumen gesammelt und anschließend in Fallrohren talwärts abgeleitet, um über Turbine und Generator zur Stromerzeugung verwendet zu werden.

Das Wasser wird nach der Energiegewinnung anderen Verwendungen zugeführt (z. B. Wasser für Haushalte, Gärtnereien usw.).

Im Falle eines starken Aufwindes im Warmluftkanal kann dieser als Nebeneffekt ebenfalls zur Stromerzeugung genutzt werden.

Grundsätzlich wird somit zum Zwecke der Stromerzeugung Warmluft in Tallagen durch aktivierende Sonnenenergie erzeugt, wobei zum Zwecke der Stromerzeugung die Warmluft in isolierten Rohren auf hohe Berge oder Türme transportiert wird, wodurch der Auftrieb der Luft gefördert wird und eine frühzeitige Kondensation verhindert wird. Darüber hinaus wird zum Zwecke der Strom- bzw. Wassererzeugung auf hohen Bergen und Türmen kalte Luft angesaugt, und zum Zwecke der Strom- bzw. Wassererzeugung die hochtransportierte Warmluft aus Tallagen mit der kalten Luft auf hohen Bergen oder Türmen in großen Räumen oder Rohren zwangsgemischt, so daß ein künstliches Gewitter mit starken Ausfall von Wasser erzeugt wird. Die Kondensation der Luft wird durch Beigabe von Staubpartikeln bzw. durch Besprühen der Mischluft mit einer Warmdusche gefördert. Das künstlich erzeugte Wasser wird gelagert und anschließend in das Tal über Turbine und Generator zur Stromerzeugung geleitet. Nach der Energiegewinnung wird das Wasser zum Beispiel in Haushalten, Gärtnereien usw. verwendet.

## Patentansprüche

1. (Anordnung zur) Stromerzeugung mit künstlich erzeugtem Wasser in großer Höhe, mit von einem niedrigen Niveau in diese Höhe führenden Rohren (5, 9), in denen nach Erwärmung durch Sonnenenergie ein wasserhaltiges Medium aufsteigt, das im oberen Bereich durch Abkühlung mittels Kaltluft durch Kondensation Wasser ausscheidet, das über Fallrohre eine Turbine beaufschlagt, die mit einem stromerzeugenden Generator verbunden ist wobei das Wasserhaltige Medium Umgebungsluft ist, **dadurch gekennzeichnet**,
a) daß in den Rohren Heizstäbe (7) angeordnet sind,
b) daß in der Tallage die Umgebungsluft durch schwarz lackierte, der Sonne ausgesetzte Flächen (2) zusätzlich erwärmt wird, und
c) daß eine Kühlkammer (31) vorgesehen ist.

2. Stromerzeugung nach Anspruch 1, **dadurch gekennzeichnet, daß** in den Rohren (9) Ventilatoren (6) angebracht sind.

3. Stromerzeugung nach Anspruch 1 oder 2 **dadurch gekennzeichnet, daß** in die Kaltluft Staubpartikelchen eingestäubt werden.

4. Stromerzeugung nach einem der Ansprüche 1 bis 3, **dadurch gekennzeichnet, daß** die schwarz lackierte Fläche ein Alu-Blech ist.

5. Stromerzeugung nach Anspruch 4, **dadurch gekennzeichnet, daß** das Alu-Blech mit einer Glasscheibe geschützt wird.

6. Stromerzeugung nach einem der Ansprüche 1 bis 5, **dadurch gekennzeichnet, daß** eine Wasserdusche für das wasserhaltige Medium vorgesehen ist.

7. Stromerzeugung nach einem der Ansprüche 1 bis 6, **dadurch gekennzeichnet, daß** die Sonnenenergie durch Prismen und Spiegeln gebündelt auf die schwarz lackierte Fläche aufgebracht wird.

8. Stromerzeugung nach einem der Ansprüche 1 bis 7, **dadurch gekennzeichnet, daß** die von einem niedrigen Niveau in diese Höhe führenden Rohre aus mehreren Rohren zusammengesetzt sind.

9. Stromerzeugung nach einem der Ansprüche 1 bis 8, **dadurch gekennzeichnet, daß** die Kühlkammer in einem Berg integriert ist, und das gekühlte Wasser der Wasserdusche zugeführt wird.

10. Stromerzeugung nach einem der Ansprüche 1 bis 9, **dadurch gekennzeichnet, daß** die Kondensation des Wasser durch ein Vibrationsmittel unterstützt wird, und zwar vorzugsweise durch einen Gong.

## Claims

1. Arrangement for generation of electricity with artificially produced water at great heights with pipes (5, 9) leading from a lower level to these heights in which having been heated up by solar energy a hydrous medium rises, this medium precipitates water by condensation having been cooled down by cold air in the higher area, this water falling down drainpipes turns a turbine which is connected to a generator generating electricity, and wherein the hydrous medium is surrounding air, **characterized by**,
a) heating elements (7) being arranged in the pipes
b) the surrounding air at valley level being additionally heated up by black varnished surfaces (2) exposed to the sun, and
c) a cooling chamber (31) being provided.

2. Generation of electricity in accordance with claim 1, **characterized by** ventilators (6), which are installed in the pipes (9).

3. Generation of electricity in accordance with claim 1 or 2, **characterized by** dust particles, which are sprayed into the cold air.

4. Generation of electricity in accordance with one of the claims 1 to 3, **characterized in that** the black varnished surface is an aluminium sheet.

5. Generation of electricity in accordance with claim 4, **characterized in that** the aluminium sheet is protected by a glass top.

6. Generation of electricity in accordance with one of the claims 1 to 5, **characterized by** a water shower being provided for the hydrous medium.

7. Generation of electricity in accordance with one of the claims 1 to 6, **characterized by** focusing the solar energy by prisms and mirrors onto the black varnished surface.

8. Generation of electricity in accordance with one of the claims 1 to 7, **characterized by** the pipes leading from a lower level to these heights being combined of several pipes.

9. Generation of electricity in accordance with one of the claims 1 to 8, **characterized by** the cooling chamber being integrated in the mountain an the cooled water being brought to a water shower.

10. Generation of electricity in accordance with one of the claims 1 to 9, **characterized by** supporting the condensation of water by a means of vibration preferably a gong.

## Revendications

1. Arrangement pour une production de courant avec de l'eau artificiellement produite en haute altitude avec des tuyaux (5, 9) menant du niveau de la plaine en altitude, dans lesquels remonte, après réchauffement par énergie solaire, un médium aqueux qui, en hauteur par refroidissement par air froid, par voie de condensation, donne de l'eau qui, par des tuyaux tombants, rebondit sur une turbine qui est reliée à un générateur d'électricité, et avec le médium aqueux étant de l'air des environs, **caractérisée par** le fait
a) que des tiges chauffantes (7) se trouvent dans les tuyaux,
b) qu'au niveau de la plaine, l'air des environs est chauffé par des superficies (2) laquées noir exposées au soleil,
c) qu'une chambre froide (31) est prévue.

2. Production de courant selon la revendication 1, **caractérisée par le fait que** des ventilateurs (6) sont posés dans les tuyaux (9).

3. Production de courant selon la revendication 1 ou 2, **caractérisée par le fait que** l'air froid est mélangé à des particules de poussières.

4. Production de courant selon les revendications 1 à 3, **caractérisée par le fait que** la superficie laquée noire est une plaque en aluminium.

5. Production de courant selon la revendication 4, **caractérisée par le fait que** la plaque en aluminium est protégée par une plaque en verre.

6. Production de courant selon les revendications 1 à 5, **caractérisée par le fait qu'**une douche d'eau est prévue pour le médium aqueux.

7. Production de courant selon les revendications 1 à 6, **caractérisée par le fait que** l'énergie solaire est mise en faisceau à travers des prismes et des miroirs pour toucher les superficies laquées noires.

8. Production de courant selon les revendications 1 à 7, **caractérisée par le fait que** les tuyaux menant du niveau de la plaine en altitude sont constitués de plusieurs tuyaux.

9. Production de courant selon les revendications 1 à 8, **caractérisée par le fait que** la chambre froide est à l'intérieur de la montagne et que l'eau refroidie est conduite vers la douche d'eau.

10. Production de courant selon les revendications 1 à 9, **caractérisée par le fait que** la condensation de l'eau est soutenue par un moyen de vibration, de préférence un gong.
